# EUROPEAN PATENT APPLICATION

(11) **EP 1 124 375 A2**
(43) Date of publication of application: **16.08.2001**
(21) Application number: 01100828.1
(22) Date of filing: 15.01.2001
(51) Int. Cl.: H04N 7/14, H04N 7/18

(54) **Wireless video monitoring system**

(30) Priority: 15.01.2000 KR 2000001873
(71) Applicant: SAMSUNG ELECTRONICS CO., LTD., Suwon-City, Kyungki-do (KR)
(72) Inventor: Park, Chun-Ho, Seodaemun-gu, Seoul (KR)
(74) Representative: Grünecker, Kinkeldey, Stockmair & Schwanhäusser Anwaltssozietät

(57) **Abstract**

There is provided a wireless video monitoring system. In the wireless video monitoring system, a wireless camera transmits video data of a monitored object in the form of an RF signal. A wireless telephone receives the RF signal from the wireless camera via a fixture, and demodulates the RF signal and displays the monitored object on a display through a portable terminal.

## Description

The present invention relates generally to a video monitoring system, and in particular, to a wireless video monitoring system.

A CC TV (Closed Circuit Television) must be installed at a heavy cost to monitor a specific object. For example, the recent apartments are provided with CC TVs for monitoring children in a playground or indoor/outdoor situations.

Monitoring with the CC TV is confined to the place where it is installed. For example, if a CC TV is installed in a living room, a user can be monitored as far as he is in a particular place, say, before the CC TV In other words, the user is not allowed to move to another place in the middle of monitoring.

Besides, since a CC camera is also installed in a fixed position, it just photographs an object at a predetermined angle from the position without freely moving to monitor other objects or places.

It is, therefore, the object of the present invention to provide a wireless video monitoring system which facilitates free monitoring of objects or places and allows a user to move in the middle of monitoring.

To achieve the above object, there is provided a wireless video monitoring system. In the wireless video monitoring system, a wireless camera transmits video data of a monitored object in the form of an RF signal. A wireless telephone receives the RF signal from the wireless camera via a fixture, and demodulates the RF signal and displays the monitored object on a display through a portable terminal.

The above object, features and advantages of the present invention will become more apparent from the following detailed description when taken in conjunction with the accompanying drawing:

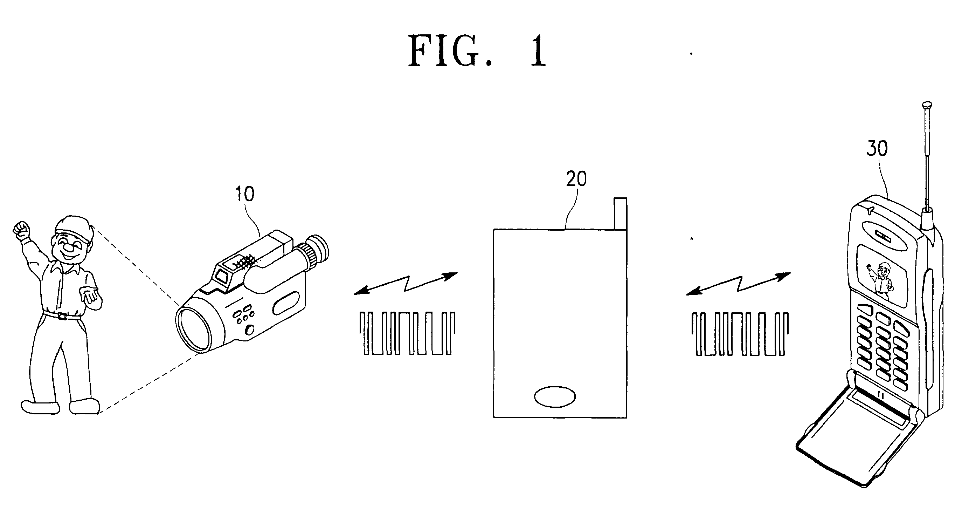

FIG. 1 illustrates a wireless video monitoring system according to an embodiment of the present invention.

A preferred embodiment of the present invention will be described hereinbelow with reference to the accompanying drawings. In the following description, well-known functions or constructions are not described in detail since they would obscure the invention in unnecessary detail.

Referring to FIG. 1, a wireless camera 10 transmits video data of a monitored object in the form of an RF (Radio Frequency) signal. A fixture 20 of a wireless phone receives the RF signal from the wireless camera 10 and a portable terminal 30 of the wireless phone demodulates the RF signal received from the fixture 20 and displays the monitored object on a display.

The wireless camera 10 optimizes the monitored video data so that it may be displayed on the display of the portable terminal 30. The display may be an LCD (Liquid Crystal Display) panel.

A digital European cordless telephone (DECT) can be used as the wireless phone. In other words, the RF signal is generated from the wireless camera 10 in TDMA (Time Division Multiple Access), TDD (Time Division Duplex), a spread spectrum scheme, or an analog RF scheme. The frequency of the RF signal ranges from 1.88 to 1.94GHz or is 2.4GHz.

The wireless camera 10 is capable of continuously transmitting monitored video data in real time or as still images to the portable terminal 30 so that the portable terminal 30 can display the video data on the display at any time when the user wants. Alternatively, the wireless camera 10 may be activated in response to a driving command received from the portable terminal 30.

In accordance with the present invention as described above, children playing in a playground or other indoor/outdoor situations can be monitored through the display of a portable terminal in a wireless phone without installing a CC TV Therefore, the cost of the CC TV is saved. Furthermore, the mobility of the portable terminal allows a user to move in the middle of monitoring and since a CC camera is wireless, the user can install the CC camera freely in an intended place.

## Claims

1. A wireless video monitoring system comprising:
a wireless camera for transmitting video data of a monitored object in the form of an RF signal; and
a wireless telephone having a fixture for receiving the RF signal and a portable terminal for receiving the RF signal from the fixture, demodulating the RF signal, and displaying the monitored object on a display.

2. The wireless video monitoring system of claim 1, wherein the wireless camera optimizes the video data to display the video data on the display.

3. The wireless video monitoring system of claim 1, wherein the wireless camera is activated dependently upon receipt of a driving command from the portable terminal.

4. The wireless video monitoring system of claim 1, wherein the wireless telephone is a digital European cordless telephone (DECT).
